# EUROPEAN PATENT SPECIFICATION

(11) **EP 2 894 941 B1**
(45) Date of publication and mention of the grant of the patent: **12.06.2019**
(21) Application number: 15150707.6
(22) Date of filing: 09.01.2015
(51) Int. Cl.: H05B 3/84

(54) **Busbars**
Sammelschienen
Barres omnibus

(30) Priority: 10.01.2014 GB 201400410; 01.10.2014 GB 201417337
(43) Date of publication of application: 15.07.2015
(73) Proprietor: Strip Tinning Limited, West Midlands B45 0JA (GB)
(72) Inventor: O'Connor, Stephen, Solihull, West Midlands B91 1LR (GB); Barton, Richard, Rugeley, Staffordshire WS15 1QQ (GB)
(74) Representative: HGF Limited

(56) References cited:
- EP-A2- 0 719 075
- GB-A- 779 144
- GB-A- 2 402 554
- US-A- 1 956 345
- US-A- 4 093 113
- US-A1- 2003 146 199
- US-A1- 2007 235 077

## Description

This invention relates to busbars, specifically, although not exclusively, to busbars usable in heated windscreens.

A busbar is typically used to provide electrical contact between a source of electrical energy and plural circuits in an electrical apparatus or system. Hence, they are formed of electrically conductive material and are typically provided as strips or tubes. It is usual to use a strip or tube shape because of those shape's inherent heat dissipation efficiency. Busbars may be electrically isolated by use of covering insulators or by use of earthed enclosures. In many cases a busbar is used for electrical conduction and not for performing a structural function.

It is known to provide as a busbar a copper strip which has been coated with tin. Such busbars are thin so that they can be provided between panes of glass to facilitate electrical connection to one or more resistively heatable wires or filaments (the heating element) in a heated windscreen, for example as shown in EP0719075. Because the busbar is thin it does not cause or generate air gaps between the facing panes of glass, which could lead to failure of the heating element. The tin coating protects the underlying copper for oxidising or otherwise reacting with or in the presence of ingressing water.

Whilst such busbars are capable of providing the necessary electrical connectivity there is a desire to provide a busbar which has or incorporates means to secure it in place within a structure. Moreover, it is also desired to provide a busbar which has a known and/or constant amount of securing means and/or securing means which is accurately located on the busbar.

In GB2402554, there is disclosed a method of applying at least one solder track to a substrate using a rotatable wheel. The substrate is subsequently split longitudinally to form lengths of material which can be used to form busbars. There is no appreciation in this document of how to provide a dimensionally invariant amount of solder along the length of busbar. A solar cell and its method of manufacture are disclosed in US2007/235077.

It is an object of the current invention to satisfy at least one of the issues aforementioned.

Accordingly, in a first aspect of the invention there is provided a busbar for installation on or in a structure, the busbar comprising a length of electrically conductive material comprising an electrically conductive substrate having a protective coating over all its longitudinal faces, having a solder material secured along at least part of the length of the electrically conductive material having a protective coating, characterised in that the cross-sectional area of the solder material varies by less than 15% along a 1mm longitudinal portion of the solder material, and the solder material covers less than 25% of the surface area of the electrically conductive material.

The electrically conductive material may be dimensionally invariant.

In this invention, the term dimensionally invariant means a material which has a constant cross section in a longitudinal direction of the busbar, and constant in this context means that the cross-sectional area varies by less than 15%, preferably equal to or less than 10%, preferably equal or less than 9, 8, 7, 6 or 5% along at least a 1mm longitudinal portion, for example along a 2, 3, 4, 5, 6, 7, 8, 9, 10mm longitudinal portion. In one embodiment, the busbar is 5, 10 or 15cm long and the cross-sectional area of solder material varies by 5% or less along the entire length.

The solder material may be positionally invariant. A positionally invariant solder material is one which is located on an electrically conductive material such that the centre line of the solder material varies by 15% or less along its length from a desired or notional position on the electrically conductive material, calculated as a function of the width of the electrically conductive material.

The electrically conductive material is preferably elongate. In one embodiment the material is in strip form, *i.e.* it has a length and width dimension significantly larger than its thickness dimension. For example, the material's width dimension can be over 50, say over 60, 70, 80, 90, 100 times its thickness dimension.

The electrically conductive material may be in strip form having a width of from 2 to 15 mm, say from 3 to 14mm, for example from 4 to 10mm. In one embodiment the strip may be about 4 mm wide, in another embodiment the strip may be about 6 mm wide, in another embodiment the strip may be 8mm wide. The variation of width is preferably tightly controlled, for example the variation is less than 10%, say less 9, 8, 7, 6, 5, 4, 3, 2% in a longitudinal direction. The electrically conductive material may have a thickness of from 10 to 120 or 100 microns, say from 15 or 30 to 100 or 90 microns. The variation of thickness is preferably tightly controlled, say the variation is less than 15%, preferably less than 14, 13, 12, 11, 10, 9, 8, 7 or 6%, *e.g.* from 1-5% along the length of the electrically conductive material.

The electrically conductive material is preferably formed from copper. The electrically conductive substrate may be a metal substrate (e.g. copper). The protective coating may be tin or tin alloy, or a polymeric coating. The protective coating may be equal to or less than 20 microns (*i.e.* ≤2x10⁻⁵m) thick, for example 15, 14, 13, 12, 11, 10, 9, 8, 7, 6, 5, 4, 3, 2, 1 microns thick. Preferably the protective coating (e.g. tin or tin alloy) is from 0.25 to 7, say 0.5 to 5 microns thick, for example from 1 to 4 microns thick. The protective coating is preferably provided on all major and longitudinal faces of the flat electrically conductive material.

The dimensionally invariant solder material may have a melting point of from 100 to 250°C, and preferably a relatively low melting point (*i.e.* T_{M} of less than 140°C and preferably less than 135°C), for example from 110 to 150°C, say 115 to 140°C, 120 to 130°C, preferably 123 to 127 °C. In a preferred embodiment, the solder material comprises one or more of lead, tin and bismuth. Preferably the solder material comprises (e.g. is formed principally from) lead and/or bismuth or tin and/or bismuth or lead and tin and bismuth. The proportion of bismuth may be from 30 to 60 w/w%. The proportion of lead may be from 40 to 60 w/w%. The proportion of tin may be from 70 to 40 w/w%. The solder length or material may be flux free or may comprise flux.

The solder material may have a width of equal to or less than 5 mm, for example from 0.5 to 5 mm, say 0.5 to 4 mm.

The dimensionally invariant solder material may cover less than 24% of the surface area of the conductive material, for example less than, 23, 22, 21, 20, 19, 18, 17, 16, 15, 14, 13% of the surface area of the conductive material.

Where the conductive material is flat, having a major surface to which the solder material is applied, the dimensionally invariant solder material may be located at or about a longitudinal centre line of the major surface, preferably with a tolerance of less than 1 mm, for example less than 0.9, 0.8, 0.7, 0.6 or 0.5 mm. In such a case the dimensionally invariant solder material will typically be applied to one of the major surfaces, and will preferably cover a minor portion of that surface, for example from 3.5 to 50 %, say from 5 to 40 %, e.g. from 7.5 to 38 %, most preferably from 10 to 30 %.

It is advantageous that the dimensionally invariant solder material is applied to a tight tolerance in respect of the amount applied and/or in respect of the desired location on the conductive material. It is beneficial that the accuracy and/or precision of application is high. It is advantageous that a minor proportion of the surface area of the conductive material is covered so as to aid installation of the busbar.

The protective coating will usually protect the electrically conductive material from environmental degradation (*e.g*. oxidation and/or other chemical or physical damage)

A second aspect of the invention provides a method of forming a busbar, the method comprising providing a length of electrically conductive material comprising an electrically conductive substrate having a protective coating over all its longitudinal faces and a solder application wheel having a body and a peripheral rim; drawing solder material from a solder bath onto the peripheral rim of the solder application wheel; and transferring solder material from the solder application wheel onto the length of electrically conductive material, such that the solder material covers less than 25% of the surface area of the electrically conductive material, where the peripheral rim of the wheel comprises an upstanding annular application portion from the base of which inclined shoulders taper towards the edge of the body portion of the wheel.

A further aspect of the invention provides apparatus for forming a busbar, the apparatus comprising means to supply a length of electrically conductive material comprising an electrically conductive substrate having a protective coating over all its longitudinal faces, a solder application wheel arranged to rotate in a bath of solder material and having a body portion and a peripheral rim for contacting the length of electrically conductive material and for applying solder from the bath thereto in order to cover less than 25% of the surface area of the electrically conductive material, the peripheral rim of the wheel comprising an upstanding annular application portion from the base of which inclined shoulders taper towards the edge of the body portion.

The wheel may be formed of a metal or an alloy, for example brass. Preferably at least a portion of the peripheral rim is formed from steel. The steel may be EN4 steel.

Preferably the entire wheel is formed from steel.

One of the advantages of the apparatus and/or method of the invention is that it allows dimensionally invariant materials to be produced in a clean and controlled manner. For example, there is no or little risk of splashes or sputter of wet solder which means so-formed parts are typically cleaner and more homogenous and/or that processing is easier and more homogeneous. Moreover we have been able to produce "commercial" quantities at high production rates such as in excess of 1 km/hr e.g. in excess of 1.2, 1.3, 1.4, 1.5, 1.6, 1.7, 1.8, 1.9 or 2.0 km/hr.

In order that the invention may be more fully understood it will now be described, by way of example only, with reference to the accompanying drawings, in which:
Figure 1A is a diagrammatic perspective view of a busbar according to the invention;
Figure 1B is a diagrammatic cross sectional view of a busbar according to the invention;
Figures 2A to 2C are a series of schematic representations demonstrating an application method not according to the invention;
Figure 3 is a schematic view of apparatus not in accordance with the invention; and
Figure 4 is a diagrammatic representation of the apparatus of Figure 3.

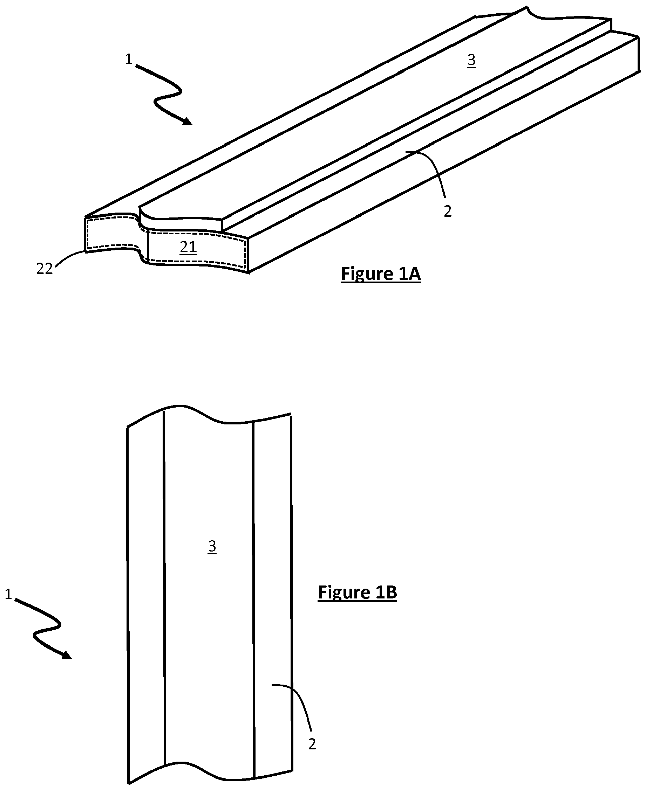

Referring to Figures 1A and 1B, there is shown a busbar 1. The busbar 1 comprises a substrate of coated copper 2 with a length of low melting point solder 3 secured thereto.

The low melting point solder 3 (*e.g.* T_{M} of less than 135°C) has a rectangular configuration.

In brief, the substrate of coated copper 2 comprises a rectangular copper strip 21, typically provided with dimensions 8 x 0.5 mm or 6 x 0.5 mm, which is coated with a very thin (e.g. from 1 to 4 micron) tin layer 22. Typically the tin layer 22 is provided by electroplating, but may also be provided by dip-coating, spraying, painting and so on.

To one side of the substrate 2 is secured a length of flux free solder 3, with a melting point of below 130°C, typically below 125°C. The length of solder 3 is preferably secured to the substrate 2 by localised heating as shall be explained in more detail below.

In Figures 1A and 1B the solder 3 is shown as being of rectangular form. Typically any localised heating will cause some of the solder 3 to melt and, once the heat source has been removed the molten solder 3 will solidify, thereby securing the solder 3 to the substrate 2.

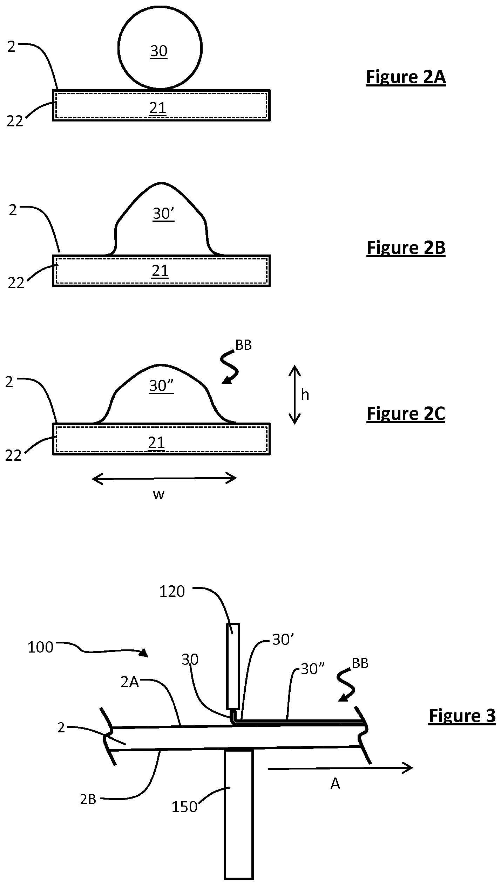

Figures 2A to 2C show a length of solder wire 30 being brought into contact with a substrate 2 and heated to secure the two together. In this instance the initial solder wire 30 has a circular cross section and as localised heating affects the solder, it at least partially melts (solder 30') and the molten part flows outwardly. Once the source of heat is removed, the solder 30' can solidify 30", as is shown in Figure 2C, to form a busbar BB.

In our experiments, a flux free lead-bismuth solder wire 30 of 1mm diameter was contacted with a copper substrate as described above and heated to melt, at least partially, the solder 30, which flows outwardly (30'). As the heat is removed, the molten solder 30' solidifies. The solidified solder 30" has flowed outwardly to provide a covered width w of 2.0 mm and a peak height h of about 0.78 mm.

The characteristics of the so-formed busbar BB are as follows:

**Table 1. Material Characteristics**

| | | |
|---|---|---|
| **Substrate** | Material | Cu (C101) |
| | Dimensions 1 | 8.0±0.4mm x 0.05mm±0.5% |
| | Dimensions 2 | 6.0±0.3mm x 0.05mm±0.5% |
| Coating | Material | Sn ≥ 99.95% |
| | Thickness | 2.5µm ± 1.5 µm |
| **Solder** | Material | Pb 44.5±0.5%; Bi 55.5±0.5% |
| | Melting Point | 124°C |
| | Dimensions (30) | 1.0±0.05mm |
| | Dimensions (30') | 1.0±0.1mm |
| | Dimensions (30") | 2.0±0.06mm(w)x0.8±0.02 mm(h) |

As can be seen from the above results, the solidified solder 30" is tightly controlled and dimensionally invariant. This is due to controlled local heating, controlled application rate of solder to conductive material and controlled cooling, as well as using well-defined starting materials (solder and substrate).

Indeed, we measured the variation along a continuous length of busbar BB (nominal length 10m) and found that the degree of variation of the solder 30" from the centre line of the conductive material 2 was less than 5% along the entire length of the busbar BB, and was less than 4% along 99% of the length of the busbar BB.

In order to apply the solder 3, 30 it is convenient to use the apparatus 100 shown in Figure 3. In the apparatus 100 conductive material 2 is continuously conveyed in the direction of arrow A (the flow direction) whilst solid solder 30 is supplied from solder supply head 120.

The solid solder 30 is brought into contact with a first major surface 2A of the continuously conveyed conductive material 2 and energy is supplied by head 150 to the other major surface 2B of the conductive material 2. The energy supplied by head 150 causes localised resistive heating of the conductive material 2, thereby at least partially melting the solder material 30 by conductive heating *(i.e.* forming melted material 30'). It may also be the case that some induction is induced in the solder material 30.

As the conductive material 2 is conveyed in the flow direction A it ceases to be resistively heated and consequently cools. As the conductive material 2 cools so does the solder 30', until it solidifies to form solid sold material 30" which is adhered to the conductive material 2, thereby forming a busbar BB. The busbar BB can be cut or otherwise subdivided to the appropriate length for use in a particular installation.

When using the above apparatus 100, we were able to produce busbars BB in which the dimensionally invariant solder material was accurately located along the centre line of one major surface of the busbar BB. In fact, the tolerance was within 0.5mm of the centre line, as measured with respect to peak concentration of solder material across the cross sectional distribution thereof.

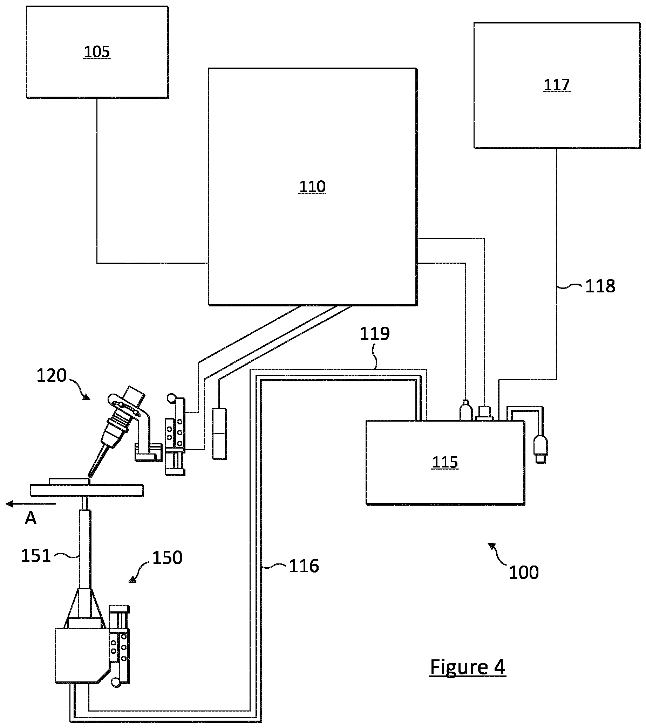

Referring now to Figure 4, there is shown an enlarged view of the apparatus 100 which uses induction heating to heat the conductive material 2.

In brief the apparatus 100 comprises a command module 105, control module 110, HF generator 115, cooling module 117, solder supply head 120 and induction heating module 150.

The control module 110 provides control signals to the HF generator 115, cooling module 117 and solder supply head 120 as well as controlling the supply of the conductive material 2 in the flow direction A. The control module 110 preferably actively controls one or more of the modules (115, 117, 120) via feedback control.

High frequency energy is supplied to the induction heating module 150 via a supply cable 116. Cooling is supplied to the HF generator 115 from the cooling module via conduit 118. In most cases the cooling module 117 will use water to cool the HF generator 115 via water conduit 118. Coolant (e.g. water) may also be supplied via conduit 119 to the induction heating module 150, although the induction heating module 150 may be directly cooled with a dedicated cooling conduit extending from the cooling module 117.

In some embodiments it is possible to utilise a 2.6kW HF generator and an induction heating module 150 with a power output of in excess of 30kVAR (*e.g.* from 30 to 50 kVAR) at a frequency of, for example, 800 kHz.

In use, the command module 105 is activated to actuate the command module 110. The command module 110 sends a control signal to the HF generator 11 which in turn energises the induction heating module 150.

The command module 110 previously, simultaneously or subsequently causes the conductive material 2 to be conveyed in the flow direction A at a known speed *v*_{A}. The command module 110 previously, simultaneously or subsequently causes the solder material 30 to be dispensed from the solder supply head 120 at a known rate Rs and to a precise location on the conductive material 2. The solder supply head 120 comprises a pair of contra-rotating gripping rollers which grasp the solder material 30 and, upon contra-rotating, dispense a length of solder material 30 from a sleeve onto the first major surface 2A of the conductive material 2. The solder material 30 is conveniently wound onto a reel for delivery via the solder supply head 120.

By energising the induction heating module 150 an induction coil 151 is energised with radio frequency electric current. The induction coil 151 induces eddy currents in the conductive material 2 which brings about local resistive heating of the conductive material 2. The heating is localised because current is induced within a facing part of the conductive material 2 which is then conveyed away from the influence of the induction coil 151. In any case, the local resistive heating is able to heat the solder material 30 conductively which causes local melting of the solder 30. As the conductive material 2 is conveyed in the flow direction A the solder solidifies 30' and adheres to the conductive material 2 to form a busbar BB.

Because the conductive material 2 is thin the induction coil 151 can act quickly to heat locally and the heat conduction path is short so heat can be efficiently transferred to the solder material 30. In our tests we have concluded that for components having the characteristics set out in Table 1 above, localised heating of the conductive material 2 to a temperature of 145 to 165°C.

Accurate location of the solder material 30 on the conductive material 2 by the solder supply head is possible. In some embodiments the solder 30 will be placed at the exact centre line of the conductive material 2. Our tests indicate that the solder 30' can be consistently placed to well with 1 mm of the centre line of the conductive material 2. Indeed, our tests indicate that placement and location of the solder material can be consistently accurate to less than 0.5mm, preferably less than 0.25mm, as measured with respect to peak concentration of solder material across the cross sectional distribution thereof.

For a solder material which covers about 2mm of the conductive material, this represents a variation of less than 15%. Coupled with our extremely small tolerance for melting the solder material to form the material 30', this represents a high degree of accuracy and precision. Moreover, because the method and apparatus enables us to manufacture continuous lengths of busbar BB the throughput is very high and the wastage rate (as a consequence of misalignment or poor adhesion, for example) is exceptionally low. Indeed we have found that it is possible to produce continuously busbar BB material at high production rates using this method, for example at a rate of in excess of 1.6 km/hr, e.g. up to and in excess of 1.8 km/hr and up to (and above) 2 km/hr.

Although the above description mentions that the solder head 120 remains static it is possible to reciprocate or otherwise move the solder head 120 to dispense the solder material 30 in a pattern onto the conductive material 2. For example, reciprocating the solder head 120 back and forth at a constant reciprocating speed about the centre line of the on-flowing conductive material 2 will cause a sinusoidal pattern of solder material 30 to be applied to the conductive material 2. Of course the same or other patterns can be provided by altering relative motion between the solder supply head 120 and conductive material 2.

It is also possible for the command module 110 to vary, for example to turn on and off the HF generator 115 (or the HF generator may run to a varying program schedule) to cause induction and hence heating in only parts of the length of solder material 30.

It is possible to use other means to heat the conductive material and/or solder material. For example, the heating may be completed by running the conductive material 2 through an oven, by heating the solder material 30 or otherwise. It is further possible to use alternate apparatus and methods to provide dimensionally invariant solder on a busbar.

For example, and in order that this aspect of the invention may be more fully understood, it will now be described, by way of example only, and with reference to the further drawings in which:

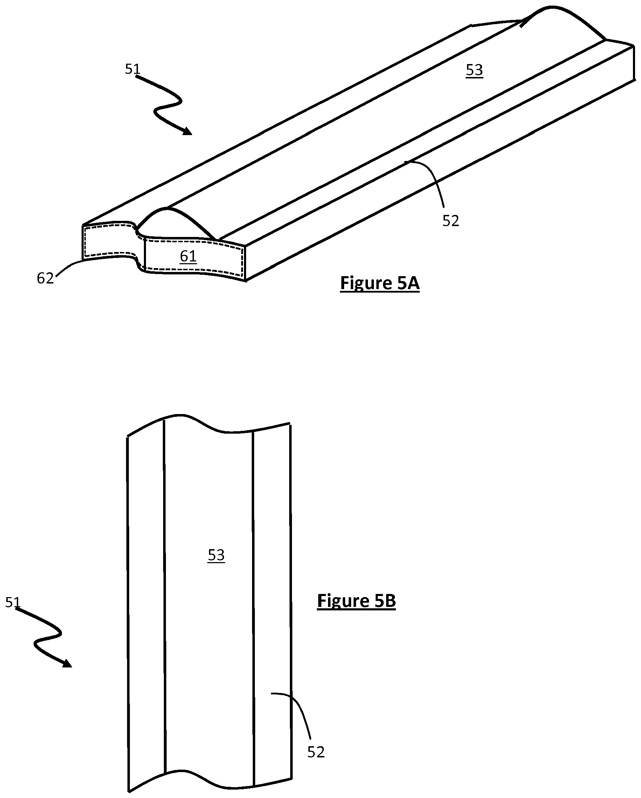

Figure 5A is a diagrammatic perspective view of a busbar according to the invention;
Figure 5B is a diagrammatic plan view of a busbar according to the invention;

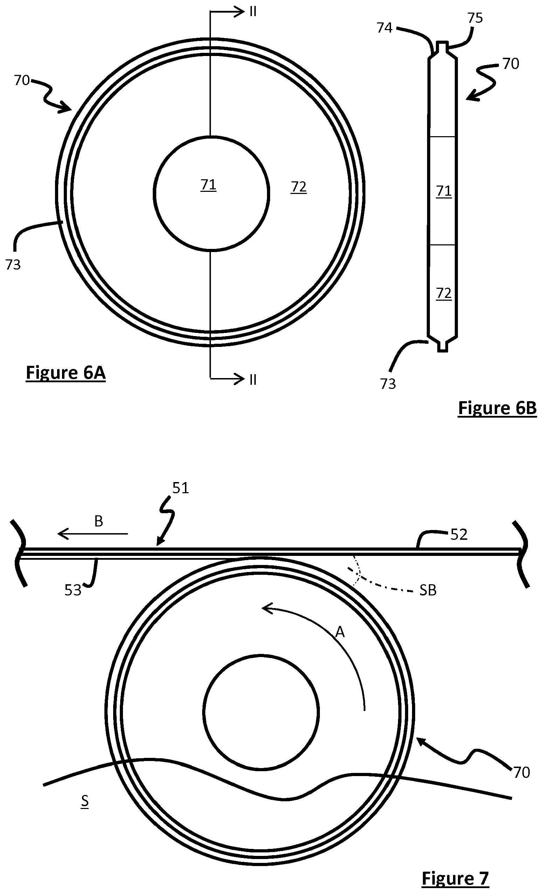

Figures 6A is a plan view of apparatus according to the invention;
Figure 6B is a sectional view in the direction of line II-II of Figure 6A;
Figure 7 is a diagrammatic representation of the apparatus of Figure 6A in use;

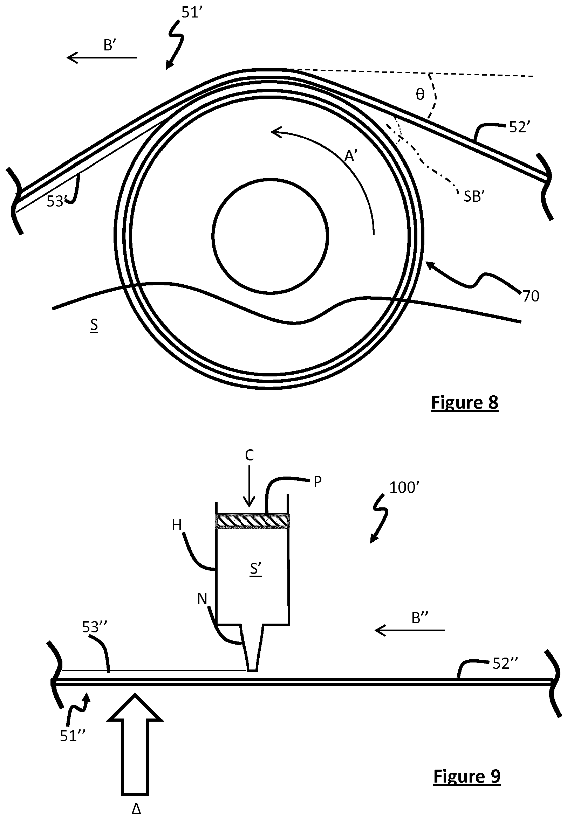

Figure 8 is a diagrammatic representation of the apparatus of Figure 6A in a second use; and
Figure 9 is a schematic representation of a further application apparatus.

Referring to Figures 5A and 5B, there is shown a busbar 51. The busbar 51 comprises a substrate of coated copper 52 with a length of low melting point solder 53 secured thereto.

The length of low melting point solder 53 (*e.g*. T_{M} of less than 135°C) may have a domed shape or configuration, which is exaggerated for illustrative purposes.

In brief, the substrate of coated copper 52 comprises a rectangular copper strip 61, for example of dimensions 8 x 0.1 mm or 6 x 0.1 mm, which is coated with a very thin (e.g. from 1 to 4 micron) tin layer 62. Typically the tin layer 62 is provided by electroplating, but may also be provided by dip-coating, spraying, painting and so on.

To one side of the substrate 52 is secured a length of solder 53, for example flux free solder 53, with a melting point preferably below 130°C, typically below 125°C. The length of solder 53 is preferably secured to the substrate 52 from a molten bath as shall be explained in more detail below.

Figure 6A and 6B show a solder application wheel 70 having a central bore 71 for locating a shaft to rotate the wheel 70 and a main body portion 72. The main body portion 72 has a peripheral annular rim 73 comprising a pair of sloped shoulders 74 and a radially extending application portion 75.

The wheel 70 preferably has the following characteristics:

| **Characteristic** | **Range** | **Example** |
|---|---|---|
| External Diameter | 130 - 160 mm | 148 mm |
| Diameter to Shoulders | 120 - 145 mm | 134 mm |
| Angle of shoulders | 10 - 25° | 18° |
| Height of Application portion | 2 - 8 mm | 3.3 mm |
| Width of application portion | 0.8 - 1.5 mm | 1.1 mm |

The application portion 75 preferably has a major flat peripheral portion and a pair of radiused corners. In one embodiment, the flat peripheral portion comprises from 70 to 85% of the external surface of the application portion 75. The radiussed corners may have a radius of curvature from 1 to 3 mm.

Referring now to Figure 7, the wheel 70 is partially submerged in a bath of molten solder S and is caused to rotate in the direction of arrow A. A length of conductive substrate 52 is conveyed in the direction of arrow B, one of the major surfaces of the conductive substrate 52 being in contact with the periphery of the application portion 75 of the wheel 70. The length of conductive substrate 52 is preferably supplied from a reel (not shown) and the so-formed busbar 51, with a length of solder 53 applied thereto, may be wound onto a further reel (not shown) once the solder has cooled sufficiently. Alternatively, the busbar 51 may be cut in-line to the appropriate or required lengths.

As the wheel 70 rotates it draws with it a portion of the solder S which is transferred to the conductive substrate 52 to form the busbar 51.

We prefer to convey the conductive substrate 52 at the same speed at which the wheel 70 rotates, thereby to ensure there is no relative movement between the wheel 70 and the conductive substrate 52 in the contact zone.

After conducting many experiments with various geometries of application wheel, we have found that a wheel 70 having the above-identified range of characteristics is particularly suitable for the application of solder 53 to a length of conductive substrate 52. For example, the wheel 70 set out above and fabricated from brass or steel was able to produce busbar 51 having dimensionally invariant and positionally invariant solder material 53 applied thereto.

Thus, the cross-sectional area of the solder 53 altered by less than 15% along a 5 cm length of the busbar 51, for example the cross sectional area of the solder 53 altered by less than 15% along a 10 cm length of the busbar 51, and in embodiments the cross sectional area of the solder 53 altered by less than 15% along a 15 cm length of the busbar 51. Moreover, the particular wheel 70 was able to produce a busbar 51 where the solder 53 was applied along the centre line of a major surface of the conductive substrate 52 with a variance or tolerance of preferably less than 1 mm, for example less than 0.9, 0.8, 0.7, 0.6 or 0.5mm during commercial operation. We believe, although we do not wish to be bound by any theory, that the shape of the peripheral rim helps to ensure positional invariance and dimensional invariance.

However, we have also surprisingly determined that the choice of material from which the wheel 70 is fabricated can also make a difference to the variance of the so-applied solder 53, especially when commercial quantities of busbar 51 are required (*i.e.* in excess of 1km/hour).

For example, with a wheel 70 of the geometry set out above fabricated from brass it was possible to manufacture a busbar 51 with a dimensionally invariant length of solder 53 applied thereto. However, small amounts of solder became adhered to the wheel 70 which required removal. As the solder was removed by operatives the wheel became damaged which exacerbated the problem of solder adhesion and meant that whilst the brass wheel was usable it had a limited lifetime (about 30 hours use). Moreover, the thickness of applied solder 53 was limited to about 10 to 20 microns when using a wheel 70 made from brass.

When we manufactured a wheel 70 from steel (for example EN4 steel) the lifetime increased to in excess of 70 hours use. Moreover, it was also possible to manufacture busbar 51 with a solder 53 applied to a thickness of up to 50 microns. Whilst we neither wish nor intend to be bound by any particular theory we believe that the capacity for a steel wheel to transfer greater amounts of solder 53 to the substrate is due to the material of the wheel, all other characteristics of the wheel 70 and operating parameters being the same.

We then decided to harden the wheel 70 fabricated from steel using a nitride hardening process. However, we surprisingly found that this did not lead to an improved application process.

With the brass and non-hardened steel wheels, a bead of solder, indicated at SB, was formed between the conductive substrate 52 and the wheel 70 immediately upstream of the wheel 70. Whilst we do not wish (and do not intend) to be bound by any particular theory, we believe that the bead of solder SB provided a reservoir of solder S from which a portion could be dragged between the conductive substrate 52 and wheel 70 to adhere to the busbar 51. With the steel wheel 70 the presence of the bead SB enabled us to increase output of busbar 51 to in excess of 1500 m/hr, and in some cases between 1600 and 1800 m/hr. Moreover, the volumetric invariance (*i.e.* the amount of solder secured to the substrate) of applied solder increased when using the steel wheel from less than 10% per 15 cm linear length of busbar 51 to less than 5% per 15 cm linear length of busbar 51.

Thus, use of the steel wheel 70 allowed us to increase productivity and to provide a less variable busbar 51.

Indeed, we have found that using our wheel 70 we can continuously produce busbar 51 at very high rates (e.g. in excess of 1500 m/hr) which busbar 51 has a solder material applied to an electrically conductive substrate, where the solder material is positionally invariant and/or dimensionally invariant. In one case, with an electrically conductive strip of 8 mm width, we are able to consistently ensure that a 2mm wide solder material is applied to and along the centre line of the electrically conductive material to a tolerance of less than ±1 mm (*i.e.* less than 12% and actually less than 6%). Moreover, using the steel wheel we are able to produce busbar 51 with volumetric invariance at high rates, wherein the solder material has a constant thickness of up to 50 microns, the volume of the solder material varying by less than 10% (and actually less than 5%) along a 15cm strip even at high production rates.

Whilst the application portion 75 of the wheel 70 is shown as extending radially and circumferentially, it may be shaped (or comprise a portion which is shaped), for example as a curvy line or zig zag, to provide a shaped length of applied solder. Additionally or alternatively the application portion 75 may be intermittent, for example to provide an intermittent length of applied solder, for example to delineate where the conductive substrate should be cut to make lengths of busbar 51.

Referring now to Figure 8, there is shown a further application method which is similar to that shown in Figure 7 (the same integers being denoted by a prime (') and, for ease of reference, not being described below except where necessary).

In this embodiment, the contact time between the moving substrate 52' and rotating wheel 70 is increased by changing the angle of attack of the substrate 51'. As shown, the angle of attack is changed from one tangential to the wheel 70 (*i.e.* θ=0°) to an acute angle (*i.e.* 0<θ<90°). Clearly, the greater the value of θ the longer the contact time between the substrate 52' and the wheel 70. However, as θ increases, the volume of the bead SB' which is able to be retained between the substrate 52' and wheel 70 is decreased and/or is spread out over a larger length of the substrate 52'. This has the effect of smearing solder outside of the optimum contact zone on the substrate 52' and can cause invariance in the applied solder 53'. We prefer an angle of 0≤θ≤45° and preferably 0≤θ≤35°.

We have found that an angle of 5≤θ≤40°, and preferably 10≤θ≤30° is particularly efficacious with a wheel diameter of 130 - 160mm. At these angles, we were able to provide busbar 51' with invariant amounts of solder and/or positionally invariant amounts of solder (e.g. at the centre line of a major surface of the substrate 52') and/or at high rates of production (*e.g.* in excess of 1.6 km/hr, e.g. up to and in excess of 1.8 km/hr and up to (and above) 2 km/hr.

We believe that the increased contact time, coupled with the shape of the application portion 75 and shoulders 74 helps to maintain and control the position of the substrate 52' with respect to the wheel 70 and hence the amount and position of the solder S applied to the substrate 52'.

Referring now to Figure 9, there is shown a further apparatus 100' comprising a syringe H having a nozzle N. The syringe H comprises a plunger P which is capable of being forced in the direction of arrow C to expel material held within the syringe H from the nozzle N.

In this example a solder paste S' is retained within the syringe H.

As substrate 52" is conveyed in the direction of arrow B" past the nozzle N, pressure is applied to the plunger P to emit solder paste S' from the syringe H and onto a major surface of the substrate 52" to provide a solder layer 53".

In order to ensure that the solder paste is flowable, the solder is provided in a flux medium. The solder may be eutectic or non-eutectic and/or is preferably lead-free, although it may also comprise lead. The solder paste will preferably have a low slump value.

As the substrate 52" with the solder paste S' applied is conveyed away from the nozzle N heat Δ is applied. This has the effect of burning off the flux to leave, once cooled, a busbar 51" with a solid solder strip applied along the centre line (or other desired position) of the substrate 52". It is possible to apply heat Δ from either side of the substrate. Heating may be undertaken by any means (radiant, conductive, convective, inductive) which causes a rapid and yet consistent removal of the flux and does not unduly affect the position of the solder on the substrate 52".

The relative position of the substrate 52" and the syringe H can be adjusted as the substrate 52" is conveyed to alter the application position of the solder paste S'. For ease of manufacture, we prefer to move the syringe H laterally of the direction of substrate flow rather than the substrate 52" but moving the substrate 52" as well as or instead of the syringe H can be achieved.

It is also possible to replace the syringe H with a reel or other supply of solid solder material, for example a wire, foil or other solid solder material and apply the solid solder material to the substrate 52". Local heating of the substrate 52" and/or the solid solder material will intimately secure the solder to the substrate 52" by at least partial melting of the solid solder. The solder may be fluxless or comprise flux (we prefer flux less) and may comprise lead or be lead free (we prefer lead-free solder).

Whilst the above description mentions that the conductive material is a flat strip, it is also possible to apply solder material to a tube or other body. Other conductive materials may be used other than copper. Other solder materials may be used. Different amount of solder may be applied to or along different parts of the busbar. For example, solder can be applied along one part of the body and not along a succeeding part, or different amounts or patterns can be provided at or along different portions, thereby potentially saving material that might otherwise be wasted.

## Claims

1. A busbar (BB, 1, 51, 51', 51") for installation on or in a structure, the busbar (BB, 1, 51, 51', 51") comprising a length of electrically conductive material (2, 52, 52', 52"), comprising an electrically conductive substrate (21, 61) having a protective coating (22, 62) over all its longitudinal faces, having a solder material (3, 30", 53) secured along at least part of the length of the electrically conductive substrate (21, 61) having a protective coating (22, 62), **characterised in that** the cross-sectional area of the solder material (3, 30", 53) varies by less than 15% along a 1mm longitudinal portion of the solder material (3, 30", 53), and the solder material (3, 30", 53) covers less than 25% of the surface area of the electrically conductive material (2, 52, 52', 52").

2. A busbar (BB, 1, 51, 51', 51") according to Claim 1, wherein the cross-sectional area of the solder material (3, 30", 53) varies by less than 15% along a length of 15cm of conductive material (2, 52, 52', 52").

3. A busbar (BB, 1, 51, 51', 51") according to Claim 1 or 2, wherein the cross-sectional area of the solder material (3, 30", 53) varies by less than 10%, for example less than 5% along a length of 15cm of conductive material (2, 52, 52', 52").

4. A busbar (BB, 1, 51, 51', 51") according to any of Claims 1, 2 or 3, wherein the electrically conductive material (2, 52, 52', 52") is in strip form having a width of from 2 to 15 mm, say from 3 to 14mm, for example from 4 to 10mm, say of 4, 6 or 8 mm.

5. A busbar (BB, 1, 51, 51', 51") according to any preceding Claim, wherein the electrically conductive material (2, 52, 52', 52") has a thickness of from 10 to 120 microns, say from 30 to 100 microns and/or the protective coating (22, 62) is less than 20 microns thick.

6. A busbar (BB, 1, 51, 51', 51") according to any preceding Claim, wherein the solder material (3, 30", 53) is located at a longitudinal centre line of a major surface of the conductive material (2, 52, 52', 52").

7. A busbar (BB, 1, 51, 51', 51") according to Claim 6, wherein the solder material (3, 30", 53) is located at a longitudinal centre line of the conductive material (2, 52, 52', 52") with a tolerance of less than 15%.

8. A busbar (BB, 1, 51, 51', 51") according to any preceding Claim, wherein the solder material (3, 30", 53) is flux free and/or comprises one or more of bismuth, tin and lead and or has a melting point of from 100 to 250°C and preferably from 110 to 150°C.

9. A busbar (BB, 1, 51, 51', 51") according to any preceding Claim, wherein the solder material comprises tin and bismuth.

10. A busbar (BB, 1, 51, 51', 51") according to Claim 9, wherein the proportion of bismuth is from 30 to 60 w/w%.

11. A method of forming a busbar according to Claim 1 the method comprising providing a length of electrically conductive material comprising an electrically conductive substrate having a protective coating over all its longitudinal faces and a solder application wheel having a body and a peripheral rim; drawing solder material from a solder bath onto the peripheral rim of the solder application wheel; and transferring solder material from the solder application wheel onto the length of electrically conductive material, such that the solder material covers less than 25% of the surface area of the electrically conductive material, where the peripheral rim of the wheel comprises an upstanding annular application portion from the base of which inclined shoulders taper towards the edge of the body portion of the wheel.

12. Apparatus for forming a busbar (BB, 1, 51, 51) according to Claim 1, the apparatus comprising means to supply a length of electrically conductive material (2, 52, 52') comprising an electrically conductive substrate (21, 61) having a protective coating (22, 62) over all its longitudinal faces, a solder application wheel (70) arranged to rotate in a bath of solder material (S) and having a body portion (72) and a peripheral rim (73) for contacting the length of electrically conductive material (2, 52, 52') and for applying solder (53') from the bath (S) thereto in order to cover less than 25% of the surface area of the electrically conductive material (2, 52, 52'), the peripheral rim (73) of the wheel (70) comprising an upstanding annular application portion (75) from the base of which inclined shoulders (74) taper towards the edge of the body portion (72).

13. Apparatus according to Claim 12, wherein at least a portion of the peripheral rim (73) is formed from steel and wherein said at least a portion preferably comprises the annular application portion (75).

## Patentansprüche

1. Sammelschiene (BB, 1, 51, 51', 51") zur Installation auf oder in einer Struktur, wobei die Sammelschiene (BB, 1, 51, 51', 51") eine Länge eines elektrisch leitfähigen Materials (2, 52, 52', 52") umfasst, umfassend ein elektrisch leitfähiges Substrat (21, 61) mit einer Schutzbeschichtung (22, 62) über all seine Längsflächen, mit einem Lötmaterial (3, 30", 53), das entlang mindestens eines Teils der Länge des elektrisch leitfähigen Substrats (21, 61) mit einer Schutzbeschichtung (22, 62) befestigt ist, **dadurch gekennzeichnet, dass** die Querschnittfläche des Lötmaterials (3, 30", 53) um weniger als 15 % entlang eines 1 mm langen Längsabschnitts des Lötmaterials (3, 30", 53) variiert und das Lötmaterial (3, 30", 53) weniger als 25 % der Oberfläche des elektrisch leitfähigen Materials (2, 52, 52', 52") bedeckt.

2. Sammelschiene (BB, 1, 51, 51', 51") nach Anspruch 1, wobei die Querschnittfläche des Lötmaterials (3, 30", 53) um weniger als 15 % entlang einer 15 cm langen Länge des leitfähigen Materials (2, 52, 52', 52") variiert.

3. Sammelschiene (BB, 1, 51, 51', 51") nach Anspruch 1 oder 2, wobei die Querschnittfläche des Lötmaterials (3, 30", 53) um weniger als 10 %, beispielsweise um weniger als 5 % entlang einer 15 cm langen Länge des leitfähigen Materials (2, 52, 52', 52") variiert.

4. Sammelschiene (BB, 1, 51, 51', 51") nach einem der Ansprüche 1, 2 oder 3, wobei das elektrisch leitfähige Material (2, 52, 52', 52") in Streifenform mit einer Breite von 2 bis 15 mm, zum Beispiel 3 bis 14 mm, zum Beispiel von 4 bis 10 mm, zum Beispiel 4, 6 oder 8 mm, ist.

5. Sammelschiene (BB, 1, 51, 51', 51") nach einem der vorstehenden Ansprüche, wobei das elektrisch leitfähige Material (2, 52, 52', 52") eine Dicke von 10 bis 120 Mikron, zum Beispiel von 30 bis 100 Mikron, aufweist, und/oder die Schutzbeschichtung (22, 62) weniger als 20 Mikron dick ist.

6. Sammelschiene (BB, 1, 51, 51', 51") nach einem der vorstehenden Ansprüche, wobei das Lötmaterial (3, 30", 53) an einer längsgerichteten Mittellinie einer größeren Oberfläche des leitfähigen Materials (2, 52, 52', 52") positioniert ist.

7. Sammelschiene (BB, 1, 51, 51', 51") nach Anspruch 6, wobei das Lötmaterial (3, 30", 53) an einer längsgerichteten Mittellinie des leitfähigen Materials (2, 52, 52', 52") mit einer Toleranz von weniger 15 % positioniert ist.

8. Sammelschiene (BB, 1, 51, 51', 51") nach einem der vorstehenden Ansprüche, wobei das Lötmaterial (3, 30", 53) flussmittelfrei ist und/oder eines oder mehrere von Wismut, Zinn und Blei ist und/oder einen Schmelzpunkt von 100 bis 250°C und vorzugsweise von 110 bis 150°C aufweist.

9. Sammelschiene (BB, 1, 51, 51', 51") nach einem der vorstehenden Ansprüche, wobei das Lötmaterial Zinn und Wismut umfasst.

10. Sammelschiene (BB, 1, 51, 51', 51") nach Anspruch 9, wobei der Anteil von Wismut von 30 bis 60 Gew.-% reicht.

11. Verfahren zum Formen einer Sammelschiene nach Anspruch 1, wobei das Verfahren das Bereitstellen einer Länge elektrisch leitfähigen Materials, umfassend ein elektrisch leitfähiges Substrat mit einer Schutzbeschichtung über all seine Längsflächen und ein Lötmittelaufbringungsrad mit einem Körper und einem Umfangsrand; das Ziehen von Lötmaterial aus einem Lötbad auf den Umfangsrand des Lötmittelaufbringungsrads; und das Übertragen von Lötmaterial vom Lötmittelaufbringungsrad auf die Länge des elektrisch leitfähigen Materials umfasst, so dass das Lötmaterial weniger als 25 % der Oberfläche des elektrisch leitfähigen Materials bedeckt, wobei der Umfangsrand des Rads einen hochstehenden ringförmigen Aufbringungsabschnitt umfasst, von dessen Basis sich geneigte Schultern zur Kante des Körperabschnitts des Rads verjüngen.

12. Vorrichtung zum Formen einer Sammelschiene (BB, 1, 51, 51) nach Anspruch 1, wobei die Vorrichtung Mittel zum Zuführen einer Länge elektrisch leitfähigen Materials (2, 52, 52'), umfassend ein elektrisch leitfähiges Substrat (21, 61) mit einer Schutzbeschichtung (22, 62) über all seine Längsflächen, ein Lötmittelaufbringungsrad (70), das angeordnet ist, um sich in einem Bad aus Lötmaterial (S) zu drehen, und das einen Körperabschnitt (72) und einen Umfangsrand (73) aufweist, um die Länge des elektrisch leitfähigen Materials (2, 52, 52') zu kontaktieren und Lötmittel (53') vom Bad (S) darauf aufzubringen, um weniger als 25 % der Oberfläche des elektrisch leitfähigen Materials (2, 52, 52') zu bedecken, umfasst, wobei der Umfangsrand (73) des Rads (70) einen hochstehenden ringförmigen Aufbringungsabschnitt (75) umfasst, von dessen Basis sich geneigte Schultern (74) zur Kante des Körperabschnitts (72) erstrecken.

13. Vorrichtung nach Anspruch 12, wobei mindestens ein Abschnitt des Umfangrands (73) aus Stahl geformt ist und wobei der mindestens eine Abschnitt vorzugsweise den ringförmigen Aufbringungsabschnitt (75) umfasst.

## Revendications

1. Barre omnibus (BB, 1, 51, 51', 51") devant être installée sur ou dans une structure, la barre omnibus (BB, 1, 51, 51', 51") comprenant une longueur de matériau conducteur de l'électricité (2, 52, 52', 52"), comprenant un substrat conducteur de l'électricité (21, 61) ayant un revêtement protecteur (22, 62) sur toutes ses faces longitudinales, ayant un matériau de soudure (3, 30", 53) fixé le long d'au moins une partie de la longueur du substrat conducteur de l'électricité (21, 61) ayant un revêtement protecteur (22, 62), **caractérisé en ce que** la section transversale du matériau de soudure (3, 30", 53) varie de moins de 15% le long d'une partie longitudinale de 1 mm du matériau de soudure (3, 30", 53), et le matériau de soudure (3, 30", 53) couvre moins de 25% de la superficie du matériau conducteur de l'électricité (2, 52, 52', 52").

2. Barre omnibus (BB, 1, 51, 51', 51") selon la revendication 1, dans laquelle la section transversale du matériau de soudure (3, 30", 53) varie de moins de 15% le long d'une longueur de 15 cm de matériau conducteur (2, 52, 52', 52").

3. Barre omnibus (BB, 1, 51, 51', 51") selon la revendication 1 ou 2, dans laquelle la section transversale du matériau de soudure (3, 30", 53) varie de moins de 10%, par exemple de moins de 5% le long d'une longueur de 15 cm de matériau conducteur (2, 52, 52', 52").

4. Barre omnibus (BB, 1, 51, 51', 51") selon l'une quelconque des revendications 1, 2 ou 3, dans laquelle le matériau conducteur de l'électricité (2, 52, 52', 52") a la forme d'une bande ayant une largeur de 2 à 15 mm, disons de 3 à 14 mm, par exemple de 4 à 10 mm, disons de 4, 6 ou 8 mm.

5. Barre omnibus (BB, 1, 51, 51', 51") selon l'une quelconque des revendications précédentes, dans laquelle le matériau conducteur de l'électricité (2, 52, 52', 52") a une épaisseur de 10 à 120 microns, par exemple de 30 à 100 microns et/ou le revêtement protecteur (22, 62) a une épaisseur inférieure à 20 microns.

6. Barre omnibus (BB, 1, 51, 51', 51") selon l'une quelconque des revendications précédentes, dans laquelle le matériau de soudure (3, 30", 53) est situé sur l'axe longitudinal d'une surface principale du matériau conducteur (2, 52, 52', 52").

7. Barre omnibus (BB, 1, 51, 51', 51") selon la revendication 6, dans laquelle le matériau de soudure (3, 30", 53) est situé sur un axe longitudinal du matériau conducteur (2, 52, 52', 52") avec une tolérance de moins de 15 %.

8. Barre omnibus (BB, 1, 51, 51', 51") selon l'une quelconque des revendications précédentes, dans laquelle le matériau de soudure (3, 30", 53) est exempt de flux et/ou comprend un ou plusieurs de : bismuth, étain et plomb et/ou a un point de fusion de 100 à 250°C et de préférence de 110 à 150°C.

9. Barre omnibus (BB, 1, 51, 51', 51") selon l'une quelconque des revendications précédentes, dans laquelle le matériau de soudure comprend l'étain et le bismuth.

10. Barre omnibus (BB, 1, 51, 51', 51") selon la revendication 9, dans laquelle la proportion de bismuth est de 30 à 60 % en poids.

11. Procédé de formation d'une barre omnibus selon la revendication 1, le procédé comprenant la fourniture d'une longueur de matériau conducteur de l'électricité comprenant un substrat conducteur de l'électricité ayant un revêtement protecteur sur toutes ses faces longitudinales et une roue d'application de soudure ayant un corps et une jante périphérique ; le prélèvement de matériau de soudure contenu dans un bain de soudure sur la jante périphérique de la roue d'application de soudure ; et le transfert du matériau de soudure de la roue d'application de soudure sur la longueur de matériau conducteur de l'électricité, de telle sorte que le matériau de soudure couvre moins de 25% de la superficie du matériau conducteur de l'électricité, où la jante périphérique de la roue comprend une partie d'application annulaire dressée à partir de la base de laquelle des épaulements inclinés diminuent en direction du bord de la partie formant corps de la roue.

12. Appareil pour former une barre omnibus (BB, 1, 51, 51) selon la revendication 1, l'appareil comprenant un moyen pour fournir une longueur de matériau conducteur de l'électricité (2, 52, 52') comprenant un substrat conducteur de l'électricité (21, 61) ayant un revêtement protecteur (22, 62) sur toutes ses faces longitudinales, une roue d'application de soudure (70) agencée pour tourner dans un bain de matériau de soudure (S) et ayant une partie formant corps (72) et une jante périphérique (73) pour contacter la longueur de matériau conducteur de l'électricité (2, 52, 52') et pour y appliquer la soudure (53') du bain (S) afin de couvrir moins de 25% de la superficie du matériau conducteur de l'électricité (2, 52, 52'), la jante périphérique (73) de la roue (70) comprenant une partie d'application annulaire dressée (75) à partir de la base de laquelle des épaulements inclinés (74) diminuent en direction du bord de la partie formant corps (72).

13. Appareil selon la revendication 12, dans lequel au moins une partie de la jante périphérique (73) est constituée d'acier et dans lequel ladite partie comprend de préférence la partie d'application annulaire (75).
